# EUROPÄISCHE PATENTSCHRIFT

(11) **EP 0 557 752 B1**
(45) Veröffentlichungstag und Bekanntmachung des Hinweises auf die Patenterteilung: **30.08.1995**
(21) Anmeldenummer: 93101706.5
(22) Anmeldetag: 04.02.1993
(51) Int. Cl.: D03D 49/02, B23Q 1/00, F16B 2/14, D03J 1/00

(54) **Geteilte Webmaschine**
Divided loom
Métier à tisser divisé

(30) Priorität: 27.02.1992 BE 9200197
(43) Veröffentlichungstag der Anmeldung: 01.09.1993
(73) Patentinhaber: Picanol N.V., 8900 Ieper (BE)
(72) Erfinder: Gruwez, Marc, B-9630 Zwalm (BE)
(74) Vertreter: Wilhelm & Dauster Patentanwälte European Patent Attorneys

(56) Entgegenhaltungen:
- EP-A- 0 451 895
- CH-A- 668 608
- DE-A- 3 615 942
- DE-A- 3 708 598
- DE-U- 9 208 800
- US-A- 3 888 284
- US-A- 4 934 413

## Beschreibung

Die Erfindung betrifft eine geteilte Webmaschine mit einem wenigstens Mittel zur Warenaufwicklung enthaltenden stationären Teil eines Maschinengestelles und mit einem von diesem entfernbaren, wenigstens die Lagerung für einen Kettbaum enthaltenden Teil des Maschinengestells.

Um die Arbeiten nach dem Auslaufen eines Kettbaumes oder bei einem Wechsel des zu verarbeitenden Materiales und/oder des zu erzeugenden Gewebes nicht mit den beengten Bedingungen innerhalb des Webmaschinensaales ausführen zu müssen, ist es bekannt (CH 668 608 A5), entweder die gesamte Webmaschine mittels eines Brückenkranes zu einem anderen Arbeitsbereich zu transportieren, oder die Webmaschine in zwei Teile zu unterteilen und nur einen dieser Teile in den freien Arbeitsbereich zu transportieren. Hierbei wird ein stationärer Teil vorgesehen, der einen Schaftantrieb, einen Ladenantrieb, einen Antrieb für eine Abzugseinrichtung und eine vollständige Warenwickeleinrichtung enthält. Der entfernbare Teil des Maschinengestelles enthält einen Kettbaum mit zugehörigem Antrieb, eine Schafteinrichtung, eine Weblade und eine Abzugseinrichtung für die fertige Ware. Bei einem Trennen der beiden Teile werden die Verbindungen zwischen der Schafteinrichtung, der Weblade und der Abzugseinrichtung zu den jeweiligen Antrieben getrennt, die dann beim Zurückbringen des entfernbaren Teils wieder hergestellt werden müssen.

Der Erfindung liegt die Aufgabe zugrunde, eine Webmaschine der eingangs genannten Art so auszubilden, daß die Arbeiten beim Entfernen und Zurückführen des entfernbaren Teils vereinfacht werden und insbesondere auch unkomplizierte Transporteinrichtungen für diese Arbeiten eingesetzt werden können.

Diese Aufgabe wird dadurch gelöst, daß die beiden Teile des Maschinengestells mit ineinandergreifenden Führungsmitteln versehen sind, die eine definierte Bahn für die Bewegung des entfernbaren Teils während des Zusammenfügens oder des Entfernens bezüglich des stationären Teils des Maschinengestelles festlegen.

Aufgrund der erfindungsgemäßen Ausbildung wird erreicht, daß eine Zwangsführung während des Entfernens oder Zusammenfügens gegeben ist, so daß auch relativ komplexe Relativbewegungen sicher durchgeführt werden können, ohne daß es eines Transportmittels mit einer komplizierten Steuerung bedarf. Die Führungsmittel stellen dabei sicher, daß während des Entfernens oder Zusammenfügens die Elemente des entfernbaren Teils nicht an Elemente des stationären Teils anstoßen, was Ursache für Schäden sein könnte. Damit ist es möglich, das entfernbare Teil und die von ihm getragenen Elemente relativ weit in Laufrichtung der Kettfäden ineinander eindringen zu lassen, so daß eine kompakte Bauweise in dieser Richtung möglich ist. Eine derartige Bewegung wäre nur unter sehr großem Aufwand mittels eines Webgerätes realisierbar, da ein Kettbaum bereits 15 N wiegen kann.

Die Erfindung ist in den Ansprüchen 1 - 11 beansprucht.

Weitere Merkmale und Vorteile der Erfindung ergeben sich aus der nachfolgenden Beschreibung des in den Zeichnungen dargestellten Ausführungsbeispiels.
- Fig. 1: zeigt eine Ansicht einer geteilten Webmaschine während des Entfernens oder Zusammenfügens eines entfernbaren Teils der Maschine von oder mit einem stationären Teil und
- Fig. 2: die Webmaschine der Fig. 1 in der Seitenansicht in dem zusammengefügten Betriebszustand der beiden Teile.

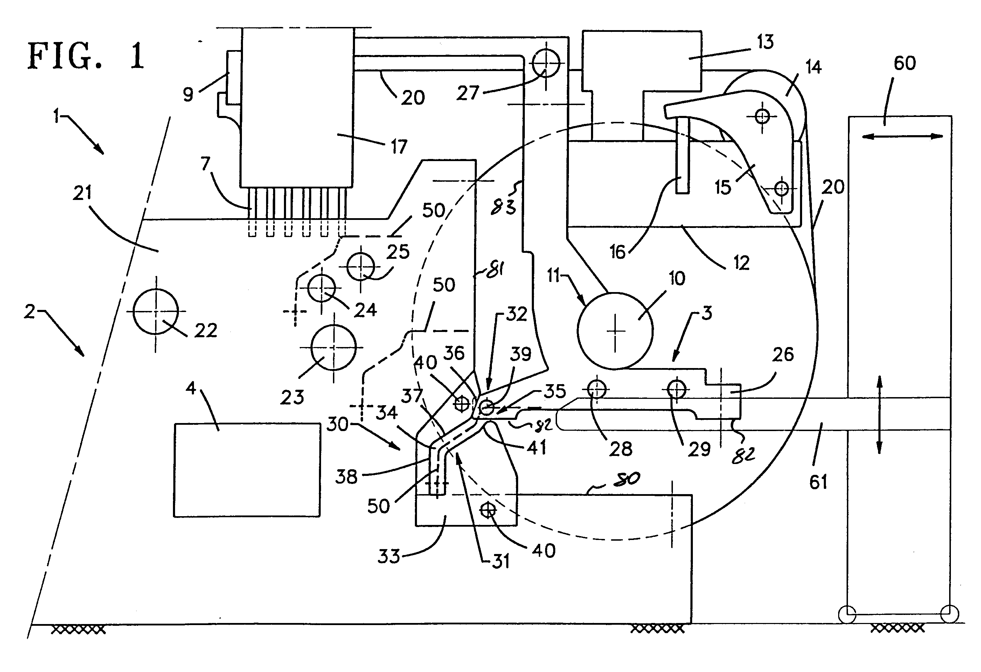

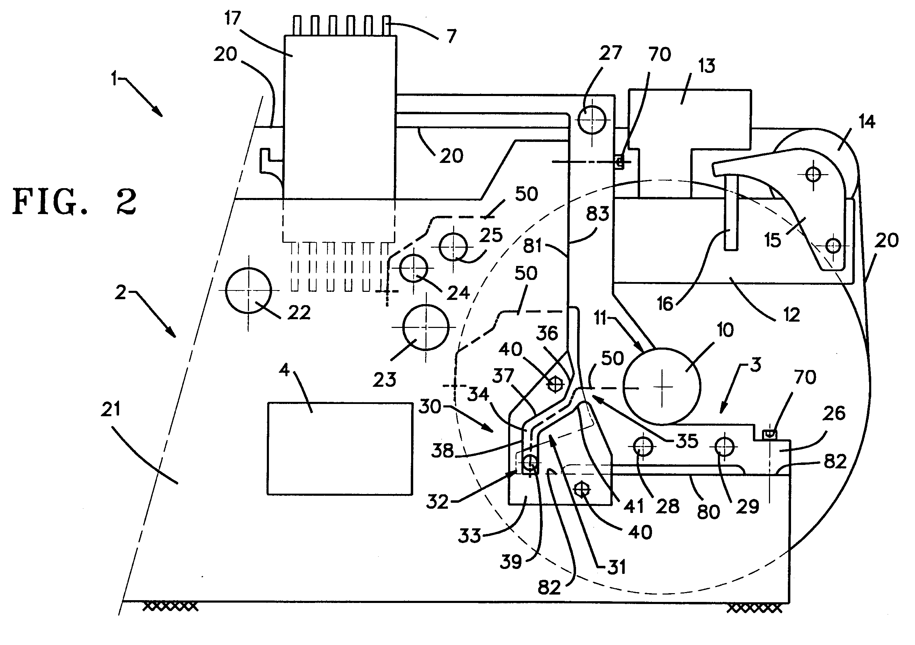

Die dargestellte Webmaschine (1) enthält ein Maschinengestell, das aus einem stationären Teil (2) und einem entfernbaren Teil (3) besteht. Die Teilungsfuge zwischen den beiden Teilen (2 und 3) verläuft im wesentlichen quer zur Materiallaufrichtung. Das Teil (2) des Maschinengestells enthält ein nicht dargestelltes Webladenantriebssystem, ein nicht dargestelltes Tuchaufwickelsystem, einen nicht dargestellten Kettbaumantrieb und einen in Fig. 1 und 2 schematisch dargestellten Schaftantrieb (4). Die in Schaftführungen (17) geführten Schäfte (7) und der Kettbaum (10) mit einer Lagerung (11) sind in dem entfernbaren Teil (3) des Maschinengestells angeordnet. Die Führung (17) der Schäfte (7) ist mit einer Halterung für ein Webblatt (9) versehen. Der Teil (3) weist oberhalb der Kettbaumlager (11) einen horizontal sich in Materiallaufrichtung erstreckenden Kragarm auf, der die Führung (17) trägt. An einem sich im wesentlichen vertikal oberhalb der Kettbaumlager (11) erstreckenden Bereich des Teils (3) ist eine Stütze (12) angebracht, die eine Umlenkrolle (14) trägt. Die Umlenkrolle (14) ist in einer an der Stütze (12) schwenkbar gehaltenen Schwinge (15) gelagert, die sich gegen eine Druckfeder (16) abstützt. Zwischen der Umlenkrolle (14) und der Führung (17) befinden sich Kettfadenwächter (13). Die von dem Kettbaum (10) abgezogene Kettfäden (20) laufen auf der der Führung (17) der Schäfte abgewandten Seite nach oben, über die Umlenkrolle (14), durch die Kettfadenwächter (13) zu den Schäften (7) und durch die Weblade (9).

Der stationäre Teil (2) des Maschinengestells weist zwei plattenförmige Seitenteile (21) auf, die durch mehrere Querstreben (22, 23) miteinander verbunden sind. Zusätzlich sind zwischen den Seitenteilen (21) weitere Elemente wie Antriebswellen (24, 25) o.dgl. angeordnet.

Der Teil (3) des Maschinengestells besteht ebenfalls aus zwei Seitenteilen (26), die in einem den Seitenteilen (21) entsprechenden Abstand angeordnet sind und die den Kettbaum (10) zwischen sich aufnehmen. Die Seitenteile (26) sind an einem im wesentlichen horizontalen Schenkel, der sich unterhalb der Kettbaumlager (11) befindet, mit Tragzapfen (28, 29) versehen. Die Seitenteile (26) sind ferner oberhalb des maximalen Durchmessers des Kettbaumes (10) mit einer Querstrebe (27) miteinander verbunden.

Die Seitenteile (21) des stationären Teils (2) des Maschinengestells sind jeweils mit einer horizontalen Führungs- und Abstützfläche (80) und mit einer vertikalen Führungs- und Abstützfläche (81) versehen, denen entsprechende Führungsflächen (82, 83) der Seitenteile (26) des Teils (3) des Maschinengestells zugeordnet sind. In der Betriebsposition (Fig. 2) liegen die Seitenteile (21 und 26) mit diesen Führungs- und Abstützflächen (81 bis 83) aneinander an. In dieser Position werden die beiden Teile (2, 3) des Maschinengestells miteinander verbunden, beispielsweise mittels die Seitenteile (26) durchdringenden und in die Seitenteile (21) eingeschraubten Schrauben (70). Die horizontale Führungs- und Abstützfläche (82) der Seitenteile (26) ist mittels einer Aussparung in zwei fußartige Abschnitte unterteilt, die sich in horizontaler Richtung wenigstens annähernd in gleichmäßigem Abstand zu der Achse der Kettbaumlager (11) befinden, so daß eine gleichmäßige Abstützung der vertikalen Last erhalten wird.

Die beiden Teile (2, 3) des Maschinengestells sind mit Führungsmitteln (30) versehen, die für den abschließenden Bereich der Bewegung beim Zusammenfügen oder den Beginn der Bewegung beim Entfernen des entfernbaren Teils (3) eine Zwangsführung bilden, d.h. für den Bereich der Bewegung, bei welcher die Schäfte (7) und der Kettbaum (10) in das stationäre Teil (2) eintauchen. Die Führungsmittel (30) legen eine Führungsbahn (50) fest, entlang welcher sich der entfernbare Teil (3) bewegen muß, wenn die von ihm getragenen Elemente, d.h. der Kettbaum (10) und die Schäfte (7), sich in dem Bereich bewegen, in welchem Elemente, beispielsweise die Wellen (24, 25) oder die Querstreben (22, 23) des Teils (2) befinden. Damit wird sichergestellt, daß die Elemente des entfernbaren Teils (3) während des Zusammenfügens oder Entfernens sicher von den Elementen des Teils (2) freigehalten werden.

Bei dem dargestellten Ausführungsbeispiel enthalten die Führungsmittel (30) an den Seitenteilen (21) des Teils (2) des Maschinengestells fest angebrachte Führungselemente (31), die jeweils aus einer Platte (33) bestehen, die mit einem nach oben offenen Schlitz (34) versehen sind. Die Platten (33) sind mit Schrauben (40) an den Seitenteilen (21) befestigt. Die Schlitze (34) der Platten (33) besitzen jeweils einen Einführungsabschnitt (35), der von zwei konvergierenden Seitenrändern (36, 41) begrenzt wird. An diesen Einführungsabschnitt (35) schließt ein schräger Schlitzabschnitt (37) an, der in einen vertikalen Abschnitt (38) übergeht.

Den Schlitzen (34) der Führungselemente (31) sind Führungselemente (32) in Form eines seitlich am vorderen Ende der Seitenteile (26) angeordneten Zapfen (39) zugeordnet, die jeweils mit geringem Spiel in den Schlitzen (34) geführt werden.

Das Entfernen des entfernbaren Teils (3) von dem stationären Teil (2) und auch das Zusammenfügen des entfernbaren Teils (3) mit dem stationären Teil (3) kann mit Hilfe eines einfachen Transportgerätes (60) durchgeführt werden, die ein Fahrwerk für ein Verfahren in Horizontalrichtung und eine Hubeinrichtung aufweist. Das Transportgerät (60) besitzt zwei horizontal ausgerichtete Gabeln (61), die mittels einer Hubeinrichtung anhebbar und abhebbar sind. Die Gabeln (61) nehmen das Teil (3) an den Zapfen (28, 29) auf, wie dies in Fig. 1 dargestellt ist. Beim Zusammenfügen verfährt das Transportgerät (60) so weit horizontal in Richtung zu dem Teil (2), bis die Zapfen (39) gegen den Rand (36) des Einführungsabschnittes (35) anlaufen. Danach werden die Gabeln (61) abgesenkt, so daß die Zapfen (39) in den Schlitz (34) einlaufen. Da der untenliegende Seitenrand (41) in Richtung zum Kettbaum den Seitenrand (36) überragt, laufen die Zapfen (39) aufgrund einer Absenkbewegung in den Einführungsabschnitt (35) ein, ohne daß es einer weiteren horizontal gesteuerten Zustellbewegung bedarf. Aufgrund der Zwangsführung mittels der Führungselemente bewegt sich dann das Teil (3) des Maschinengestells entlang der Bahn (50), ohne daß der Verlauf dieser Bewegung gesteuert werden muß. Hierbei kann das Transportgerät (60) bei gelöster Bremse eine entsprechende Horizontalbewegung abfahren. In entsprechender Weise kann das Teil (3) des Maschinengestells auch von dem stationären Teil (2) entfernt werden. Hierfür genügt ein einfaches Anheben mittels der an die Zapfen (28, 29) angreifenden Gabeln (61), wobei dann das Teil (3) zusätzlich zu der von den Gabeln (61) verursachten Hubbewegung eine Horizontalbewegung ausführt.

Zu erwähnen ist noch, daß vor dem Entfernen des Teils (3) das Webblatt (9) von dem Webladenantriebssystem gelöst und in die Halterung der Schaftführung (17) eingesetzt wird. Nach einem Zusammenfügen der Teile (2, 3) wird das Webblatt (9) wieder der Halterung entnommen und mit dem Webladenantriebssystem verbunden, das in dem stationären Teil (2) des Maschinengestells angeordnet ist.

Vor dem Entfernen des entfernbaren Teils (3) von dem stationären Teil des Maschinengestells (2) muß die Verbindung zwischen dem Schaftantrieb (4) und den Schäften (7) getrennt werden, die nach dem Zusammenfügen der beiden Teile (2, 3) wieder hergestellt werden muß. Hierzu eignen sich beispielsweise Verbindungselemente zwischen dem Schaftantrieb (4) und den Schäften (7), wie sie aus dem US-Patent 3 888 284 bekannt sind.

Ferner muß vor dem Entfernen des entfernbaren Teils (3) von dem stationären Teil (2) der Kettbaumantrieb von dem Kettbaum (10) getrennt werden. Nach einem Zusammenfügen muß diese Verbindung wieder hergestellt werden. Hierfür eignet sich beispielsweise ein Antriebssystem, wie es aus der EP 0 451 895 A1 bekannt ist.

## Patentansprüche

1. Geteilte Webmaschine mit einem wenigstens Mittel zur Warenaufwicklung enthaltenden stationären Teil eines Maschinengestells und mit einem von diesem entfernbaren, wenigstens die Lagerung (11) für einen Kettbaum (10) enthaltenden zweiten Teil (3) des Maschinengestells, dadurch gekennzeichnet, daß die beiden teile (2, 3) des Maschinengestells mit ineinandergreifenden Führungsmitteln (30) versehen sind, die eine definierte Bahn (50) für die Bewegung des entfernbaren Teils (3) während des Zusammenfügens oder des Entfernens relativ zu dem stationären Teil (2) des Maschinengestells festlegen.

2. Webmaschine nach Anspruch 1, dadurch gekennzeichnet, daß der entfernbare Teil (3) des Maschinengestells mit einem von der Lagerung (11) des Kettbaums (10) hinwegragenden Kragarm versehen ist, der eine Führung (17) für ein Schaftpaket trägt.

3. Webmaschine nach Anspruch 1 oder 2, dadurch gekennzeichnet, daß in dem stationären Teil (2) des Maschinengestells ein Schaftantrieb (4) angeordnet ist.

4. Webmaschine nach einem der Ansprüche 1 bis 3, dadurch gekennzeichnet, daß in dem stationären Teil (2) des Maschinengestells ein Kettbaumantrieb angeordnet ist.

5. Webmaschine nach einem der Ansprüche 1 bis 4, dadurch gekennzeichnet, daß an dem entfernbaren Teil (3) des Maschinengestells in Ablaufrichtung der Kettfäden (20) vor der Führung (17) des Schaftpaketes eine Kettfadenführungs- und Spanneinrichtung (14, 15, 16) angebracht ist.

6. Webmaschine nach einem der Ansprüche 1 bis 5, dadurch gekennzeichnet, daß an dem entfernbaren Teil (3) des Maschinengestells zwischen der Kettfadenführungs- und Spanneinrichtung (14, 15, 16) und der Führung (17) des Schaftpaketes eine Kettfadenüberwachungseinrichtung (13) angebracht ist.

7. Webmaschine nach einem der Ansprüche 1 bis 6, dadurch gekennzeichnet, daß die Führung (17) für das Schaftpaket mit einer Halterung für ein Webblatt (9) versehen ist.

8. Webmaschine nach einem der Ansprüche 1 bis 7, dadurch gekennzeichnet, daß die definierte Bahn (50) mit einem schrägen Einführungsabschnitt (35, 37) beginnt und in einen im wesentlichen vertikalen Abschnitt (38) übergeht.

9. Webmaschine nach einem der Ansprüche 1 bis 8, dadurch gekennzeichnet, daß die ineinandergreifenden Führungsmittel (30) einen an einem der Teile (2) des Maschinengestells angebrachten Führungsschlitz (34) und einen an dem anderen Teil (3) des Maschinengestells angebrachten Zapfen (39) enthalten.

10. Webmaschine nach einem der Ansprüche 1 bis 9, dadurch gekennzeichnet, daß das entfernbare Teil (3) des Maschinengestells (2) mittels wenigstens einer Querstrebe verbundene Seitenteile (26) enthält, die in der zusammengefügten Position des Maschinengestells an Abstütz- und Führungsflächen (80, 82) von Seitenteilen (21) des stationären Teils (2) des Maschinengestells fixiert sind.

11. Webmaschine nach einem der Ansprüche 1 bis 10, dadurch gekennzeichnet, daß die Seitenteile (26) des entfernbaren Teils (3) mit Mitteln zum Ansetzen einer Transporteinrichtung (60, 61) versehen sind.

## Claims

1. A split weaving machine with one stationary machine frame part containing at least cloth take-up means and a second machine frame part (3) containing at least the bearing (11) for a warp beam (10) which can be separated from the former part, characterised in that the two parts (2, 3) of the machine frame are provided with interlocking guide means (30) which define a specific path (50) for the movement of the removable part (3) while it is being joined to or removed from the stationary part (2) of the machine frame.

2. A weaving machine in accordance with Claim 1, characterised in that the removable part (3) of the machine frame is provided with a jib which extends away from the bearing (11) of the warp beam (10) and which carries a guide (17) for a shaft assembly.

3. A weaving machine in accordance with Claim 1 or 2, characterised in that a shaft drive unit is located in the stationary part (2) of the machine frame.

4. A weaving machine in accordance with one of Claims 1 to 3, characterised in that a warp beam drive unit is located in the stationary part (2) of the machine frame.

5. A weaving machine in accordance with one of Claims 1 to 4, characterised in that a warp guide and tensioning device (14, 15, 16) is mounted on the removable part (3) of the machine frame before the guide (17) on the shaft assembly in the run-off direction of the warp threads.

6. A weaving machine in accordance with one of Claims 1 to 5, characterised in that a warp monitoring device (13) is mounted on the removable part (3) of the machine frame between the thread guide and tensioning device (14, 15, 16) and the guide (17) on the shaft assembly.

7. A weaving machine in accordance with one of Claims 1 to 6, characterised in that the guide (17) for the shaft assembly is provided with a fixing device for a reed (9).

8. A weaving machine in accordance with one of Claims 1 to 7, characterised in that the specific path (50) starts with an angled lead-in section (35, 37) and becomes an essentially vertical section (38).

9. A weaving machine in accordance with one of Claims 1 to 8, characterised in that the interlocking guide means (30) contain one guide channel (34) on one of the parts (2) of the machine frame and a pin (39) on the other part (3) of the machine frame.

10. A weaving machine in accordance with one of Claims 1 to 9, characterised in that the removable part (3) of the machine frame (2) contains side parts (26) connected by at least one cross strut which when the machine frame is in the joined position are fixed to support and guide surfaces (80, 82) on the side parts (21) of the stationary part (2) of the machine frame.

11. A weaving machine in accordance with one of Claims 1 to 10, characterised in that the side parts (26) of the removable part (3) are provided with means to adding a transport device (60, 61).

## Revendications

1. Machine à tisser divisée, ayant une partie de bâti de machine qui est fixe et contient au moins un moyen pour l'enroulement du tissu, et ayant une deuxième partie (3) du bâti de machine, détachable de la première, contenant au moins le support (11) d'une ensouple de chaîne (10), caractérisée en ce que les deux parties (2, 3) du bâti de machine sont pourvues de moyens de guidage (30) entrant en prise l'un avec l'autre, moyens qui définissent un certain trajet (50) pour le déplacement de la partie détachable (3) pendant sa réunion avec la partie fixe (2) du bâti de machine, ou pendant son éloignement par rapport à cette partie fixe.

2. Machine à tisser selon la revendication 1, caractérisée en ce que la partie détachable (3) du bâti de machine est pourvue d'un bras en porte-à-faux, qui dépasse à partir du support (11) de l'ensouple de chaîne (10), bras qui porte un guidage (17) destiné à un paquet de lames.

3. Machine à tisser selon la revendication 1 ou 2, caractérisée en ce qu'une commande de lames (4) est disposée dans la partie fixe (2) du bâti de machine.

4. Machine à tisser selon l'une des revendications 1 à 3, caractérisée en ce qu'une commande d'ensouple de chaîne est disposée dans la partie fixe (2) du bâti de machine.

5. Machine à tisser selon l'une des revendications 1 à 4, caractérisée en ce qu'un dispositif de guidage et de tension de fils de chaîne (14, 15, 16) est rapporté à la partie détachable (3) du bâti de machine dans le sens de défilement des fils de chaîne (20) avant le guidage (17) du paquet de lames.

6. Machine à tisser selon l'une des revendications 1 à 5, caractérisée en ce qu'un mécanisme de casse-chaîne (13) est rapporté à la partie détachable (3) du bâti de machine, entre le dispositif de guidage et de serrage du fil de chaîne (14, 15, 16) et le guidage (17) du paquet de lames.

7. Machine à tisser selon l'une des revendications 1 à 6, caractérisée en ce que le guidage (17) destiné au paquet de lames est pourvu d'une fixation destinée à un peigne (9).

8. Machine à tisser selon l'une des revendications 1 à 7, caractérisée en ce que le trajet parfaitement défini (50) commence par un tronçon d'introduction incliné (35, 37), et se poursuit par un tronçon essentiellement vertical (38).

9. Machine à tisser selon l'une des revendications 1 à 8, caractérisée en ce que les organes de guidage (30), qui entrent en prise l'un dans l'autre, contiennent une rainure-guide (34), rapportée à l'une des parties (2) du bâti de machine, et un pivot (39) rapporté à l'autre partie (3) du bâti de machine.

10. Machine à tisser selon l'une des revendications 1 à 9, caractérisée en ce que la partie détachable (3) du bâti de machine (2) contient des parties latérales (26), reliées par au moins une entretoise transversale, parties latérales qui, en position réunie du bâti de machine, sont fixées à des surfaces d'appui et de guidage (80, 82) de parties latérales (21) de la partie fixe (2) du bâti de machine.

11. Machine à tisser selon l'une des revendications 1 à 10, caractérisée en ce que les parties latérales (26) de la partie détachable (3) sont pourvues de moyens pour fixer un dispositif de transport (60, 61).
